# EUROPEAN PATENT APPLICATION

(11) **EP 4 831 003 A1**
(43) Date of publication of application: **28.10.2026**
(21) Application number: 25902845.4
(22) Date of filing: 15.08.2025
(51) Int. Cl.: B60R 1/24, B60K 35/23

(54) **METHOD AND SYSTEM FOR DISPLAYING PANORAMIC IMAGE OF AREA IN FRONT OF VEHICLE, STORAGE MEDIUM, AND ELECTRONIC DEVICE**

(30) Priority: 13.12.2024 CN 202411840770
(71) Applicant: Chery Automobile Co., Ltd., Wuhu, Anhui 241006 (CN)
(72) Inventor: TANG, Junwei, Wuhu, Anhui 241006 (CN); XU, Wenfeng, Wuhu, Anhui 241006 (CN); LI, Jing, Wuhu, Anhui 241006 (CN)
(74) Representative: Adamson Jones
(86) International application number: PCT/CN2025/114957
(87) International publication number: WO 2026/123758

(57) **Abstract**

A method and a system for displaying a panoramic image of an area in front of a vehicle, a storage medium, and an electronic device. The method comprises: acquiring an image of an area in front of a vehicle, and generating a panoramic display image on the basis of the image of the area in front of the vehicle (S1); acquiring a real-time vehicle speed and steering wheel angle data of the vehicle during travel, calculating a predicted travel trajectory of the vehicle on the basis of the real-time vehicle speed and the steering wheel angle data, and combining the predicted travel trajectory with the panoramic display image to generate a first panoramic image (S2); and acquiring information on an obstacle in front of the vehicle, determining a position of the obstacle by combining said information with the first panoramic image, annotating the position of the obstacle in the first panoramic image and generating a second panoramic image, and displaying the second panoramic image via a PHUD display module (S3).

## Description

The present disclosure claims priority to Chinese Patent Application No. 202411840770.7, filed December 13, 2024, and entitled "METHOD AND SYSTEM FOR DISPLAYING FRONT PANORAMIC IMAGE OF VEHICLE, STORAGE MEDIUM AND ELECTRONIC EQUIPMENT", the entire contents of which are incorporated herein by reference.

### TECHNICAL FIELD

The present disclosure relates to the technical field of automotive intelligent driving, and particularly relates to a method and system for displaying a front panoramic image of a vehicle.

### BACKGROUND

In the related art, the mainstream solution for displaying the front view of the vehicle is to capture images of the vehicle's surroundings through a 360-degree camera system and project them onto the central control screen. The system can capture front images of the vehicle through the front camera and then project these images onto the central control screen, enabling the driver to clearly observe the environment in front of the vehicle, including blind spots and obstacles. The drawback of this solution is that the front images are presented on the central control screen, which distracts the driver's concentration when observing the images on the central control screen.

In the related art, the invention patent with Application No. CN202210438601.5 discloses a display system for an intelligent cockpit and an intelligent vehicle. The display system for the intelligent cockpit includes an immersive instrument panel, an A-pillar display screen, and a naked-eye 3D instrument. The immersive instrument panel is configured to display image information of the front blind area of the vehicle, which is the image information of the driver's viewing area blocked by the front engine hood of the intelligent vehicle. The A-pillar display screen is configured to display image information of A-pillar blind areas, which is the image information of the driver's viewing areas blocked by the left and right A-pillars of the intelligent vehicle. The naked-eye 3D instrument is arranged on the instrument console of the intelligent vehicle to display map information of the current position of the intelligent vehicle in a suspended form. Although this solution can display the image information of the front blind area of the vehicle, it is restricted by physical frames, resulting in a relatively narrow displayed front field of view. Moreover, the images displayed in a suspended manner cannot be well integrated with the real scene.

### SUMMARY

To solve the above problems, the present disclosure provides a method and system for displaying a front panoramic image of a vehicle. A front image of the vehicle is captured and processed to generate a panoramic display image. A predicted trajectory of the vehicle is calculated according to real-time speed and steering angle data, and a first panoramic image is generated in combination with the panoramic display image and the predicted trajectory. Front obstacle information is acquired, and a front obstacle position is determined by combining the front obstacle information with the first panoramic image. A second panoramic image is generated by marking the front obstacle position on the first panoramic image, and is displayed by a PHUD display module. Therefore, the front panoramic image containing the predicted trajectory and front obstacle position is presented to the driver.

The present disclosure is realized through the following technical solutions.

In one aspect, embodiments of the present disclosure provide a method for displaying a front panoramic image of a vehicle, the method includes:
acquiring a front image of the vehicle, and generating a panoramic display image based on the front image of the vehicle;
acquiring real-time speed and steering angle data of the vehicle, calculating a predicted trajectory of the vehicle based on the real-time speed and the steering angle data, and generating a first panoramic image by combining the predicted trajectory with the panoramic display image; and
acquiring front obstacle information of the vehicle, determining a front obstacle position by combining the front obstacle information with the first panoramic image, generating a second panoramic image by marking the front obstacle position on the first panoramic image, and displaying the second panoramic image by using a PHUD display module.

Furthermore, the method includes: generating a third panoramic image based on the second panoramic image in a case where the front obstacle position overlaps with the predicted trajectory, and displaying the third panoramic image by the PHUD display module to send an early warning signal to a driver.

Furthermore, the method includes: capturing the front image of the vehicle by an image acquisition module, converting the front image into front image data of the vehicle, and transmitting the front image data to an image processing module;
extracting, by the image processing module, front sub-images captured by sub-cameras of the image acquisition module based on the front image data of the vehicle, wherein the sub-cameras capture front images of the vehicle from different angles;
extracting front sub-images corresponding to the same frame from all the front sub-images, and determining a front panoramic image by performing image processing on each of the front sub-images corresponding to the same frame; and
extracting front sub-images corresponding to the same frame from all the front sub-images frame by frame, determining the front panoramic image frame by frame, and synthesizing the panoramic display image.

Furthermore, the method includes: performing distortion removal processing on the front sub-images to correct image distortion caused by camera distortion;
adjusting the brightness and contrast of the front sub-images of the same frame to keep a consistent light effect among the front sub-images;
extracting feature points and descriptors of the front sub-images by adopting a feature detector to characterize features in the front sub-images;
matching the feature points among the front sub-images by using a matcher, comparing the similarity of the descriptors, and determining corresponding relations between the front sub-images;
calculating a homography matrix according to a matching result of the feature points of the front sub-images, aligning all the front sub-images, performing perspective transformation by virtue of the homography matrix, and mapping the front sub-images to the same coordinate system to rectify the front sub-images; and
stitching the rectified front sub-images of the same frame, and processing overlapping areas generated after stitching the front sub-images to eliminate obvious seams at stitching positions of the front sub-images.

Furthermore, the method includes: calculating a driving trajectory of the vehicle by adopting a single-track model based on the real-time speed and the steering angle data of the vehicle to generate the predicted trajectory of the vehicle; and
generating the second panoramic image by performing image fusion on the predicted trajectory and the panoramic display image.

Furthermore, the method includes: collecting the front obstacle information and transmitting the front obstacle information to an obstacle early warning module;
determining, by the obstacle early warning module, a front obstacle position and a front obstacle attribute by combining the front obstacle information with the first panoramic image, wherein the front obstacle information comprises distance, position, and attribute; and
generating the second panoramic image by marking the front obstacle position and the front obstacle attribute on the first panoramic image with bounding boxes and/or texts.

Furthermore, the method includes: converting the data format of the front obstacle information, representing spatial coordinates of front obstacles in a point cloud form, and determining a front obstacle point cloud;
judging whether a spatial overlapping area exists between the predicted trajectory of the vehicle and the front obstacle point cloud; and
generating the third panoramic image based on the second panoramic image to send the early warning signal to the driver in a case where the spatial overlapping area exists between the predicted trajectory and the front obstacle point cloud.

On another aspect, based on the same inventive concept, embodiments of the present disclosure further provide a system for displaying a front panoramic image of a vehicle, which includes an image processing module, a trajectory prediction module, and an obstacle early warning module;
the image processing module is configured to acquire a front image of the vehicle and generate a panoramic display image based on the front image of the vehicle;
the trajectory prediction module is configured to acquire real-time speed and steering angle data of the vehicle, calculate a predicted trajectory of the vehicle based on the real-time speed and the steering angle data, and generate a first panoramic image by combining the predicted trajectory with the panoramic display image; and
the obstacle early warning module is configured to acquire front obstacle information of the vehicle, determine a front obstacle position by combining the front obstacle information with the first panoramic image, and generate a second panoramic image by marking the front obstacle position on the first panoramic image; and the obstacle early warning module is further configured to generate a third panoramic image based on the second panoramic image in a case where the front obstacle position overlaps with the predicted trajectory.

On another aspect, based on the same inventive concept, embodiments of the present disclosure further provide a computer-readable storage medium storing one or more programs. The one or more programs, when executed, implement the aforementioned method for displaying a front panoramic image of a vehicle.

In another aspect, based on the same inventive concept, embodiments of the present disclosure further provide an electronic device including a processor, a communication interface, the aforementioned computer-readable storage medium, and a communication bus; wherein the processor, the communication interface, and the computer-readable storage medium communicate with each other through the communication bus; and
the processor is configured to execute programs stored in the computer-readable storage medium.

Compared with related technologies, the present disclosure has the following advantages:
1. Visual blind spots during driving are reduced, providing the driver with a wider front view. The displayed images can be better fused with real scenes.
2. The visible area fully covers the vehicle front cabin. Images displayed on the front windshield are clearer and less susceptible to external light and interference. Drivers can obtain key road information without sight shifting and attention distraction, which improves driving safety and convenience.

Other features and advantages of the present disclosure will be set forth in the subsequent description. Some of them will become apparent from the description, or may be learned by practice of the present disclosure. The objects and other advantages of the present disclosure may be realized and attained by virtue of the structures specified in the description, claims, and accompanying drawings.

### BRIEF DESCRIPTION OF DRAWINGS

FIG. 1 is a flowchart of a method for displaying a front panoramic image of a vehicle according to some embodiments of the present disclosure;
FIG. 2 is a schematic diagram of a PHUD display according to some embodiments of the present disclosure;
FIG. 3 is a block diagram of a system for displaying a front panoramic image of a vehicle according to some embodiments of the present disclosure;
FIG. 4 is a structural schematic diagram of a vehicle according to some embodiments of the present disclosure; and
FIG. 5 is a structural schematic diagram of a vehicle according to some embodiments of the present application.

### DETAILED DESCRIPTION

To make the objectives, technical solutions, and advantages of the embodiments of the present disclosure clearer, the technical solutions in the embodiments of the present disclosure will be clearly and comprehensively explained below in conjunction with the accompanying drawings. Obviously, the described embodiments are a part of the embodiments of the present disclosure, not all of them. Based on the embodiments of the present disclosure, all other embodiments acquired by those of ordinary skill in the art without creative effort fall within the scope of protection of the present disclosure.

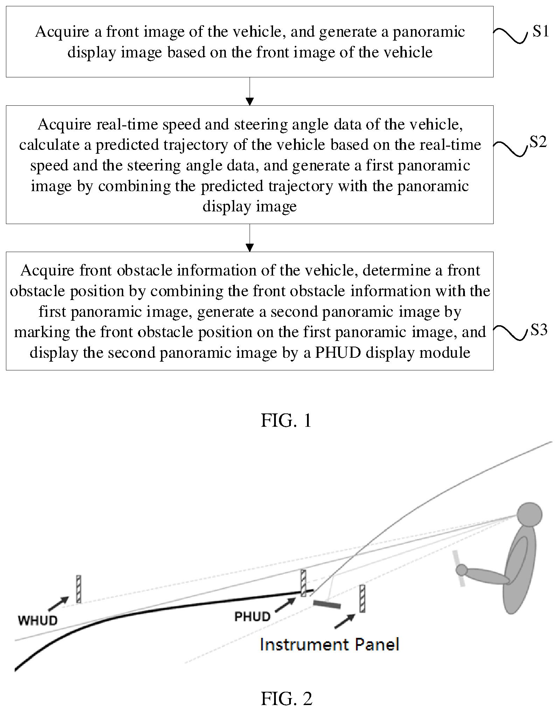

In one aspect, FIG. 1 is a flowchart of a method for displaying a front panoramic image of a vehicle according to some embodiments of the present disclosure. As shown in FIG. 1, the embodiments of the present disclosure provide a method for displaying a front panoramic image of a vehicle, including the following steps S1 to S3.

In S1, a front image of the vehicle is acquired, and a panoramic display image is generated based on the front image of the vehicle.

In S2, real-time speed and steering angle data of the vehicle are acquired, the predicted trajectory of the vehicle is calculated based on the real-time speed and the steering angle data, and a first panoramic image is generated in combination with the panoramic display image.

In S3, front obstacle information of the vehicle is acquired, a front obstacle position is determined by combining the front obstacle information with the first panoramic image, and the front obstacle position is marked on the first panoramic image to generate a second panoramic image.

In the embodiments of the present disclosure, the image acquisition module is configured to capture the front image of the vehicle, and the captured front image is preprocessed to generate the panoramic display image; the predicted trajectory of the vehicle is calculated based on the real-time vehicle speed and steering angle data, and the first panoramic image is generated by combining with the panoramic display image, which includes the predicted trajectory on the basis of the panoramic display image. The front obstacle position is determined, and the front obstacle position is marked on the first panoramic image to generate a second panoramic image. which includes the front obstacle position of the vehicle on the basis of the first panoramic image. A PHUD display module is configured to display the second panoramic image to the driver.

The above panoramic display image refers to a wide-angle view of the surrounding environment of the vehicle formed by synthesizing image data captured by multiple cameras, which are generally arranged at the front, rear, left, and right sides of the vehicle. The first panoramic image is generated by combining the predicted trajectory of the vehicle on the basis of the panoramic display image. The predicted trajectory is a possible driving path of the vehicle within a future period of time, such as several seconds or minutes, which is predicted based on the real-time speed and steering angle data of the vehicle. The second panoramic image is an image marked with the front obstacle position on the basis of the first panoramic image.

In some embodiments, the front obstacle position is marked on the second panoramic image. Alternatively, the marking of front obstacle positions is presented by different graphic marks, symbol marks and color marks, which are not limited in the present disclosure. For example, the first front obstacle position is marked as a triangle on the second panoramic image, and the second front obstacle position is marked as a square on the second panoramic image.

As shown in FIG. 2, the image displayed by the windshield head-up display (WHUD) technology in the related art suspends above the front cabin of the vehicle and at the horizontal viewing position of the driver's normal sight. The images displayed by WHUD are in front of the driver's line of sight and may overlap with the real road scene, interfering with the driver's normal vision and causing visual confusion and distraction. In addition, information displayed by WHUD may be affected by ambient light, reflection, and other factors, which reduces image clarity and visibility.

Generally, the vehicle instrument is disposed at the middle front or the front part of the driver cockpit. When the driver views the front image of the vehicle through the instrument, it is required to shift the line of sight from the front road surface down to the instrument. Such a sight shift will distract the driver's attention away from the road, weaken observation and vigilance towards road conditions ahead, and increase driving risks. Especially under high-speed driving or complex road conditions, sight shift may result in missing key information and triggering dangerous situations.

Therefore, the panoramic head-up display (PHUD) technology is adopted in the solution to present the front panoramic image of the vehicle to the driver. The projection position of PHUD images is between the display position of WHUD and the position of the instrument. The visible area of the PHUD technology fully covers the front cabin of the vehicle. High-reflectivity black ink is printed on the lower side of the imaging windshield glass of the PHUD module. This design enables images to be displayed more clearly on the front windshield glass and is less susceptible to interference from external light. With the adoption of PHUD technology, the driver can acquire key road information without shifting sight or distracting attention, so as to improve driving safety and convenience.

In some examples, acquiring the front image of the vehicle and generating the panoramic display image based on the front image of the vehicle specifically includes the following S11 to S14.

In S11, the image acquisition module captures the front image of the vehicle, converts it into front image data of the vehicle, and sends the front image data to the image processing module.

In S12, the image processing module extracts front sub-images captured by each sub-camera of the image acquisition module based on the front image data of the vehicle.

Specifically, the image acquisition module includes multiple sub-cameras configured to capture front images of the vehicle from different angles. Therefore, front sub-images captured by each sub-camera of the image acquisition module are extracted to determine the panoramic display image in the subsequent process. The front sub-image means an image with an independent viewing angle captured by a single camera, such as an image of the 120-degree field of view at the vehicle head covered by the front-view camera.

In S13, the front sub-images corresponding to the same frame are extracted, and the front panoramic image is determined by performing the image processing on the front sub-images.

In some embodiments, it is guaranteed that all front sub-images are acquired at the same moment, so as to prevent stitching dislocation caused by vehicle movement. The front panoramic image is a panoramic stitching result formed by single-frame or same-frame front sub-images.

In S14, front sub-images corresponding to the same frame are extracted frame by frame, the front panoramic images are determined frame by frame, and the panoramic display image is synthesized.

Specifically, front sub-images are split frame by frame, and image processing is performed on the split images frame by frame. After processing each frame of images, complete images are synthesized to acquire the panoramic display image. The panoramic display image covers visual blind spots that cannot be directly observed by the driver, such as vehicle A-pillars, which effectively reduces blind spots in the driving process.

In some examples, extracting front sub-images corresponding to the same frame and determining the front panoramic image by performing image processing on the front sub-images specifically includes the following S131 to S136.

In S131, distortion removal processing is performed on the front sub-images to correct image distortion caused by camera distortion.

The distortion removal processing refers to eliminating image distortion generated by camera lens characteristics, such as wide-angle lenses and fisheye lenses. Distortion is usually manifested as bent or twisted straight lines in images. The purpose of distortion removal processing is to correct such distortion through a mathematical model, generally a camera internal parameter model, so that the images can be closer to the real scene.

In S132, the brightness and contrast of each front sub-image of the same frame are adjusted to unify the light effect of all front sub-images.

In actual shooting, differences in the angle and position of each camera as well as ambient light may lead to inconsistent brightness and contrast among captured images. Optionally, adjusting the brightness and contrast of front sub-images of the same frame ensures consistent light performance. It avoids obvious discrepancies between images caused by light differences during subsequent image stitching.

In S133, a feature detector is adopted to extract feature points and descriptors of each front sub-image so as to characterize features contained in the front sub-images.

The feature point refers to a point located in a stable area of a front sub-image, which can still be detected under image rotation, scaling, brightness variation, and other changes. For instance, feature points include corners, edges, and textures in front sub-images.

The descriptor is a numerical vector corresponding to a feature point and describes the content of the surrounding area of the feature point, which facilitates matching identical feature points in different images.

In S134, feature points among different front sub-images are matched by means of a matcher, the similarity of descriptors is compared, and the corresponding relationship between different front sub-images is determined.

Specifically, the feature detector includes Oriented FAST and Rotated BRIEF (ORB) or Scale-Invariant Feature Transform (SIFT), and the matcher includes Fast Library for Approximate Nearest Neighbors (FLANN) or Brute-Force Matcher (BFMatcher).

In S135, the homography matrix is calculated according to the matching result of feature points of front sub-images, all front sub-images are aligned, perspective transformation is conducted via the homography matrix, all front sub-images are mapped to the same coordinate system, so as to rectify the front sub-images.

The homography matrix is a 3×3 linear transformation matrix applied to map corresponding points of front sub-images into the same coordinate system. Optionally, front sub-images captured from different viewing angles, such as front-view and side-view cameras are aligned to the same coordinate system through geometric transformation, so as to eliminate deformation resulted from viewing angle differences.

In S136, the rectified front sub-images of the same frame are stitched, and obvious seams at image stitching positions are removed by processing overlapping areas generated after stitching.

In some examples, acquiring the real-time speed and the steering angle data of the vehicle, calculating the predicted trajectory of the vehicle based on the real-time speed and the steering angle data, and generating the first panoramic image in combination with the panoramic display image specifically includes the following S21 to S22.

In S21, the driving trajectory of the vehicle is calculated by adopting a single-track model based on the real-time speed and the steering angle data of the vehicle, so as to generate the predicted trajectory of the vehicle.

In S22, the image fusion is performed on the predicted trajectory and the panoramic display image to generate the second panoramic image.

In some examples, acquiring the front obstacle information of the vehicle, determining the front obstacle position by combining the front obstacle information with the first panoramic image, marking the front obstacle position on the first panoramic image to generate the second panoramic image specifically includes the following S31 to S33.

In S31, the front obstacle information is collected and transmitted to the obstacle early warning module.

In S32, the obstacle early warning module combines the front obstacle information with the first panoramic image to determine the accurate position and attributes of the obstacle.

Specifically, the front obstacle information includes distance, position, and attribute. Computer vision algorithms may be adopted to identify obstacles appearing in the first panoramic image. Such algorithms can automatically analyze various objects and obstacles in the front image of the vehicle, and accurately identify their positions and features. Front obstacle attributes may be determined by recognizing obstacle features. The front obstacle information may also be directly collected by the obstacle recognition module. The front obstacle attributes include obstacle types such as pedestrians, vehicles, and traffic cones, as well as corresponding information of height and width.

In S33, the front obstacle position and front obstacle attributes are marked on the first panoramic image by using bounding boxes and/or texts to generate the second panoramic image.

In some examples, the method for displaying the front panoramic image of the vehicle further includes generating a third panoramic image based on the second panoramic image to send an early warning signal to the driver in the case that an overlap exists between the front obstacle position and the predicted trajectory. In addition to displaying the front panoramic image more clearly and comprehensively, specific warnings need to be provided to remind the driver to decelerate, stop, or take evasive action.

Further, generating the third panoramic image based on the second panoramic image to send the early warning signal to the driver when the overlap exists between the front obstacle position and the predicted trajectory specifically includes the following S41 to S43.

In S41, the data format of the front obstacle information is converted, the spatial coordinates of front obstacles are expressed in a point cloud form, and the point cloud of the front obstacles is determined.

In S42, whether there is a spatial overlapping area between the predicted trajectory of the vehicle and the point cloud of the front obstacles is determined.

In S43, if the spatial overlapping area exists between the predicted trajectory and the point cloud of the front obstacles, the third panoramic image is generated based on the second panoramic image to send the early warning signal to the driver.

### Embodiment 1:

In S101, the front image of the vehicle is acquired, and the panoramic display image is generated based on the front image of the vehicle.

The image acquisition module in the present disclosure includes multiple sub-cameras, which are used to shoot images in multiple directions and angles. The image acquisition module captures the front image of the vehicle, converts the front image into front image data of the vehicle, and transmits the front image data to the image processing module for processing.

After receiving the front image data of the vehicle, the image processing module extracts front sub-images corresponding to the same frame from all front sub-images based on the front image data, and conducts image processing on the front sub-images of the same frame to determine the front panoramic image. The following description takes determining one frame of front panoramic image via front sub-images of the same frame as an example.

Distortion removal processing is performed on the front sub-images to correct image distortion caused by camera distortion. The brightness and contrast of each front sub-image of the same frame are adjusted to achieve a consistent light effect and uniform visual presentation of all front sub-images. The feature detector extracts feature points and descriptors of each front sub-image so as to characterize features of the front sub-image. The matcher matches feature points among different front sub-images, compares the similarity of descriptors, and determines the correspondence between different front sub-images. The feature detector includes ORB (Oriented FAST and Rotated BRIEF) or SIFT (Scale-Invariant Feature Transform), and the matcher includes FLANN (Fast Library for Approximate Nearest Neighbors) or BFMatcher (Brute-Force Matcher).

The homography matrix is calculated based on the feature point matching results of front sub-images to align all front sub-images, and the perspective transformation is conducted by using the homography matrix to map all front sub-images to the same coordinate system so as to rectify the images. The rectified front sub-images of the same frame are stitched, obvious seams at stitching positions are eliminated by processing overlapping areas generated after stitching, so as to finally acquire the front panoramic image.

With the above method, front sub-images corresponding to the same frame are extracted frame by frame, the front panoramic images are determined frame by frame, and continuous front panoramic images are synthesized into the panoramic display image.

In S102, the predicted trajectory of the vehicle is calculated, and the first panoramic image is determined by combining the predicted trajectory with the panoramic display image.

In the embodiments of the present disclosure, the driving trajectory of the vehicle is calculated based on real-time speed and steering angle data during vehicle travel. The single-track model is adopted to compute the driving trajectory with real-time speed and steering angle data. As a vehicle kinematic model, the single-track model can accurately calculate the driving path. Combined with real-time vehicle speed, steering angle, and wheelbase parameters, the model can deduce the turning radius of the vehicle and update the current vehicle position within continuous time steps, thereby generating the predicted trajectory of the vehicle. The predicted trajectory can be fused with the panoramic display image and clearly presented within the driver's field of view through the PHUD display module, improving visibility and comprehension for the driver.

In S103, the front obstacle position is determined, and the front obstacle position is marked on the first panoramic image to generate the second panoramic image.

In the embodiments of the present disclosure, the obstacle recognition module collects front obstacle information, which includes distance, position, attribute, and other parameters. The accurate position and attributes of obstacles are marked on the first panoramic image by using bounding boxes and/or texts based on the front obstacle position and attributes, so as to generate the second panoramic image. The obstacle recognition module may be an advanced driver assistance system (ADAS) system.

In S104, the third panoramic image is generated in the case that the front obstacle position overlaps with the predicted trajectory.

In the embodiments of the present disclosure, the ADAS system serves as the obstacle recognition module. Sensors equipped in the ADAS system, such as lidar and cameras, acquire obstacle information around the vehicle body. The obstacle information is converted into data format, and the spatial coordinates of obstacles are expressed in the form of a point cloud to acquire an obstacle point cloud. The system automatically judges whether conflict exists between the predicted trajectory and obstacles according to the spatial overlapping area between the predicted trajectory and the obstacle point cloud. If overlapping occurs, the third panoramic image is generated based on the second panoramic image. Obstacles are highlighted on the third panoramic image, and the early warning signal is triggered to remind the driver of potential hazards.

Taking vehicle driving on the road as an example, the front camera of the ADAS system first captures images of vehicles ahead, and the front radar of the ADAS system acquires distance information of obstacles or preceding vehicles via visual algorithms to mark front obstacles in real time. The predicted trajectory is determined based on driving speed, steering angle, and wheelbase. When the predicted trajectory overlaps with marked obstacles, the overlapping area is highlighted as obstacle warning, namely the generation of the third panoramic image. The third panoramic image containing early warning information is directly displayed in the front cabin via the PHUD display module, effectively reminding the driver of potential obstacle risks.

In some embodiments, when the front obstacle position overlaps with the predicted trajectory, the predicted collision time is calculated based on obstacle type and/or relative speed between the vehicle and obstacles. Obstacle types include but are not limited to one or more of pedestrians, vehicles other than the driven vehicle, trees, stones, animals, electric poles, maintenance signs, traffic cones, and other barriers. The relative speed refers to the speed difference between obstacles and the driven vehicle.

In some embodiments, risk levels are classified according to predicted collision time. The predicted collision time is negatively correlated with the risk level, that is, a shorter predicted collision time corresponds to a higher risk level, while a longer predicted collision time corresponds to a lower risk level.

In some embodiments, the risk level is defined as a high-risk level when the predicted collision time falls within a first time interval, corresponding to a first early warning signal. The risk level is defined as a medium-risk level when the predicted collision time falls within a second time interval, corresponding to a second early warning signal. The risk level is defined as a low-risk level when the predicted collision time falls within a third time interval, corresponding to a third early warning signal.

For example, a high-risk level is triggered when the predicted collision time is less than 3 seconds, accompanied by flashing red indicator light on the display screen and seat vibration. A medium-risk level is triggered when the predicted collision time is no less than 3 seconds and less than 5 seconds, accompanied by flashing yellow indicator light and audible alarm. A high-risk level is triggered when the predicted collision time is no less than 5 seconds, accompanied by flashing blue indicator light.

In some embodiments, when generating the third panoramic image, the type of current driving scenario is identified, and the information density displayed by the PHUD display module is dynamically adjusted. The PHUD display module presents different information density under different driving scenarios. Optionally, driving scenario types include but are not limited to a high-speed driving scenario, parking scenario, traffic congestion scenario and other driving scenarios.

For instance, under the high-speed driving scenario, the PHUD display module adopts high information density, only displaying predicted collision time and hiding obstacle attribute information. Under the parking scenario, the PHUD display module adopts low information density, presenting information displayed in high-speed scenarios as well as obstacle attributes and accurate distance to obstacles.

In the embodiments of the present disclosure, the driver monitoring system collects eye position data of the driver, including eye coordinates and gaze point information. To acquire eye position data in real-time, the driver monitoring system regularly acquires and updates the eye position data to track changes of the driver's line of sight.

Based on the eye position data acquired by the driver monitoring system, the PHUD display module adjusts the display position and angle of the front panoramic image, so that the projected panoramic image fits the actual line of sight of the driver and avoids visual conflict.

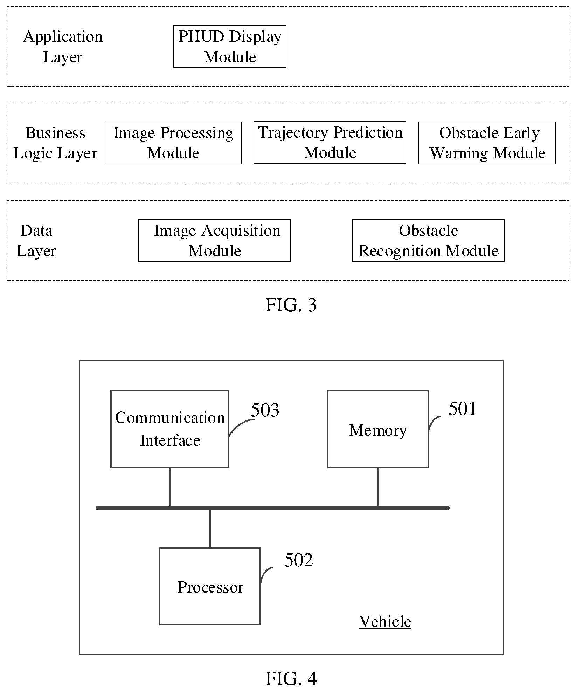

FIG. 3 is a block diagram of a system for displaying a front panoramic image of a vehicle according to some embodiments of the present disclosure. As shown in FIG. 3, the system for displaying the front panoramic image of the vehicle includes an image processing module, a trajectory prediction module, and an obstacle early warning module. The image processing module is configured to acquire a front image of the vehicle, and generate a panoramic display image based on the front image of the vehicle. The trajectory prediction module is configured to acquire real-time speed and steering angle data of the vehicle, calculate a predicted trajectory of the vehicle based on the real-time speed and the steering angle data, and generate a first panoramic image by combining the predicted trajectory with the panoramic display image. The obstacle early warning module is configured to acquire front obstacle information of the vehicle, determine a front obstacle position by combining the front obstacle information with the first panoramic image, and generate a second panoramic image by marking the front obstacle position on the first panoramic image. The obstacle early warning module is further configured to generate a third panoramic image based on the second panoramic image in a case where the front obstacle position overlaps with the predicted trajectory.

Further, the system for displaying the front panoramic image of the vehicle further includes a PHUD display module configured to display the second panoramic image for the driver, and display the third panoramic image to send an early warning signal in the case that the front obstacle position overlaps with the predicted trajectory.

In the embodiments of the present disclosure, the system for displaying the front panoramic image of the vehicle further includes an image acquisition module and an obstacle recognition module. The image acquisition module is configured to capture the front image of the vehicle, convert the front image into front image data, and transmit the front image data to the image processing module. The obstacle recognition module is configured to collect front obstacle information, including distance, position, and attributes.

In practical deployment, system modules are divided into a data layer, a business logic layer, and an application layer. The data layer includes the image acquisition module and the obstacle recognition module. The business logic layer includes the image processing module, the trajectory prediction module, and the obstacle early warning module. The application layer includes the PHUD display module, which displays the panoramic display image as fused, the predicted trajectory, the obstacle position, and corresponding early warning information.

FIG. 4 is a structural schematic diagram of a vehicle according to some embodiments of the present disclosure. The vehicle includes:
a memory 501, a processor 502, and a computer program stored in the memory 501 and operable on the processor 502.

The processor 502 executes the program to implement the display screen control method described in the above embodiments.

Further, the vehicle further includes:
a communication interface 503 configured to realize the communication between the memory 501 and the processor 502.

The memory 501 is configured to store computer programs executable by the processor 502.

The memory 501 may include high-speed random access memory (RAM), and may also include non-transitory memory, such as at least one disk storage.

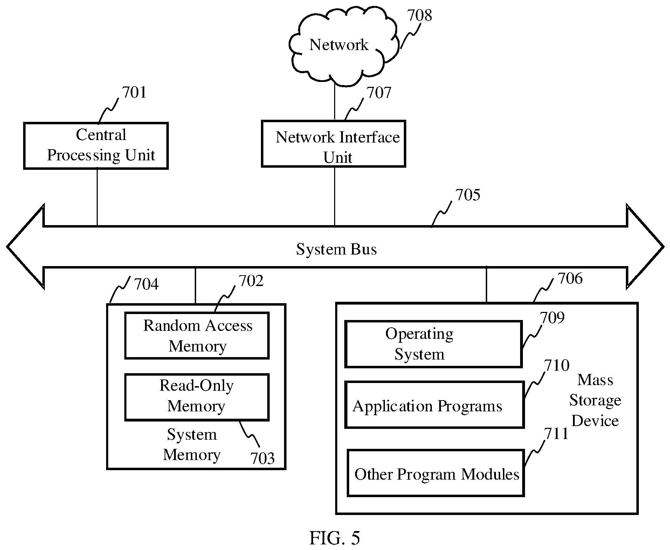

If the memory 501, the processor 502, and the communication interface 503 are implemented independently, they can be connected with each other via a bus for mutual communication. The bus can be an industry standard architecture (ISA) bus, a peripheral component interconnect (PCI) bus, an extended industry standard architecture (EISA) bus or other types of buses. Buses can be classified into address bus, data bus, control bus, and the like. Only one thick line is adopted for illustration in FIG. 5, which does not represent a single bus or a single bus type.

Optionally, if the memory 501, the processor 502, and the communication interface 503 are integrated into a single chip in actual implementation, internal interfaces can be adopted to complete mutual communication.

The processor 502 may be a central processing unit (CPU), an application specific integrated circuit (ASIC), or one or more integrated circuits configured to implement functions of the embodiments of the present disclosure.

Referring further to FIG. 5, the memory, processor, and communication interface arranged in the vehicle may be provided by a computer device mounted on the vehicle. The processor illustrated in FIG. 4 can be implemented as a CPU 701. The memory 501 includes a system memory 704 composed of random access memory (RAM) 702 and read-only memory (ROM) 703. The bus is implemented as a system bus 705 connecting the system memory 704 and the CPU 701. The vehicle is further equipped with a mass storage device 706 for storing an operating system 709, application programs 710, and other program modules 711.

The mass storage device 706 is connected to the CPU 701 through a mass storage controller connected to the system bus 705. The mass storage device 706 and its associated computer-readable media provide non-transitory storage for the vehicle. The mass storage device 706 includes computer-readable media such as hard disk or compact disc read-only memory (CD-ROM) drive.

Without loss of generality, the computer-readable media include computer storage media and communication media. The computer storage media refers to transitory and non-transitory, removable and non-removable media implemented by any method or technology for storing computer-readable instructions, data structures, program modules, and other data. The computer storage media includes RAM, ROM, erasable programmable read-only memory (EPROM), electrically-erasable programmable read-only memory (EEPROM), flash memory, and other solid-state storage devices, CD-ROM, digital versatile disc (DVD), and other optical storage media, magnetic tape cartridge, magnetic tape, disk storage, and other magnetic storage devices. Those skilled in the art shall understand that computer storage media are not limited to the above-listed types. The system memory 704 and the mass storage device 706 are collectively referred to as a memory.

According to various embodiments of the present disclosure, the vehicle may be connected to remote computers on a network via the Internet. The vehicle can access a network 708 through a network interface unit 707 connected to the system bus 705, and can also be connected to other types of networks or remote computer systems via the network interface unit 707.

The memory stores at least one computer program. The CPU 701 executes the stored computer program to implement all or part of steps of the method described in the above embodiments.

The embodiments of the present disclosure further provide a computer-readable storage medium storing one or more programs. The one or more programs, when executed, perform the above method for displaying the front panoramic image of the vehicle.

The embodiments of the present disclosure further provide a computer-readable storage medium, which stores a computer program. The computer program, when executed by a processor, causes the processor to perform the above method for displaying the front panoramic image of the vehicle.

The embodiments of the present disclosure further provide a computer program product, including a computer program or instruction. The computer program or instruction is executed to perform the above method for displaying the front panoramic image of the vehicle.

The embodiments of the present disclosure further provide an electronic device, including a processor, a communication interface, the aforementioned computer-readable storage medium, and a communication bus. The processor, the communication interface, and the computer-readable storage medium communicate with one another through the communication bus. The processor is configured to execute programs stored in the computer-readable storage medium.

It should be noted that electrical connection between each unit does not necessarily mean a physical circuit connection. Indirect connection modes that can achieve the purpose of the present disclosure are all applicable to the embodiments.

Although the present disclosure has been described in detail with reference to the above embodiments, those skilled in the art can make modifications to the technical solutions recorded in the embodiments or make equivalent replacements for partial technical features. Such modifications or replacements shall not depart from the concept and scope of the technical solutions of the embodiments of the present disclosure.

## Claims

1. A method for displaying a front panoramic image of a vehicle, comprising:
acquiring a front image of the vehicle, and generating a panoramic display image based on the front image of the vehicle;
acquiring real-time speed and steering angle data of the vehicle, calculating a predicted trajectory of the vehicle based on the real-time speed and the steering angle data, and generating a first panoramic image by combining the predicted trajectory with the panoramic display image; and
acquiring front obstacle information of the vehicle, determining a front obstacle position by combining the front obstacle information with the first panoramic image, generating a second panoramic image by marking the front obstacle position on the first panoramic image, and displaying the second panoramic image by a PHUD display module.

2. The method according to claim 1, further comprising:
generating a third panoramic image based on the second panoramic image in a case where the front obstacle position overlaps with the predicted trajectory, and displaying the third panoramic image by the PHUD display module to send an early warning signal to a driver.

3. The method according to claim 1 or 2, wherein acquiring the front image of the vehicle and generating the panoramic display image based on the front image of the vehicle comprises:
capturing the front image of the vehicle by an image acquisition module, converting the front image into front image data of the vehicle, and transmitting the front image data to an image processing module;
extracting, by the image processing module, front sub-images captured by sub-cameras of the image acquisition module based on the front image data of the vehicle, wherein the sub-cameras capture the front images of the vehicle from different angles;
extracting front sub-images corresponding to a same frame from all the front sub-images, and determining a front panoramic image by performing image processing on each of the front sub-images corresponding to the same frame; and
extracting front sub-images corresponding to the same frame from all the front sub-images frame by frame, determining the front panoramic image frame by frame, and synthesizing the panoramic display image.

4. The method according to any one of claims 1 to 3, wherein extracting the front sub-images corresponding to the same frame from all the front sub-images, and determining the front panoramic images by performing image processing on each of the front sub-images corresponding to the same frame comprises:
performing distortion removal processing on the front sub-images to correct image distortion caused by camera distortion;
adjusting brightness and contrast of the front sub-images of the same frame to keep consistent light effect among the front sub-images;
extracting feature points and descriptors of the front sub-images by adopting a feature detector to characterize features in the front sub-images;
matching the feature points among the front sub-images by using a matcher, comparing similarity of the descriptors, and determining corresponding relations between the front sub-images;
calculating a homography matrix according to a matching result of the feature points of the front sub-images, aligning all the front sub-images, performing perspective transformation by virtue of the homography matrix, and mapping the front sub-images to a same coordinate system to rectify the front sub-images; and
stitching the rectified front sub-images of the same frame, and processing overlapping areas generated after stitching the front sub-images to eliminate obvious seams at stitching positions of the front sub-images.

5. The method according to any one of claims 1 to 4, wherein acquiring the real-time speed and the steering angle data of the vehicle, calculating the predicted trajectory of the vehicle based on the real-time speed and the steering angle data, and generating the first panoramic image by combining the predicted trajectory with the panoramic display image comprises:
calculating a driving trajectory of the vehicle by adopting a single-track model based on the real-time speed and the steering angle data of the vehicle to generate the predicted trajectory of the vehicle; and
generating the second panoramic image by performing image fusion on the predicted trajectory and the panoramic display image.

6. The method according to any one of claims 1 to 5, wherein acquiring the front obstacle information of the vehicle, determining the front obstacle position by combining the front obstacle information with the first panoramic image, and generating the second panoramic image by marking the front obstacle position on the first panoramic image comprises:
collecting the front obstacle information and transmitting the front obstacle information to an obstacle early warning module;
determining, by the obstacle early warning module, a front obstacle position and a front obstacle attribute by combining the front obstacle information with the first panoramic image, wherein the front obstacle information comprises distance, position, and attribute; and
generating the second panoramic image by marking the front obstacle position and the front obstacle attribute on the first panoramic image with bounding boxes and/or texts.

7. The method according to any one of claims 1 to 6, wherein generating the third panoramic image based on the second panoramic image in a case where the front obstacle position overlaps with the predicted trajectory to send the early warning signal to the driver comprises:
converting data format of the front obstacle information, representing spatial coordinates of front obstacles in a point cloud form, and determining a front obstacle point cloud;
judging whether a spatial overlapping area exists between the predicted trajectory of the vehicle and the front obstacle point cloud; and
generating the third panoramic image based on the second panoramic image to send the early warning signal to the driver in a case where the spatial overlapping area exists between the predicted trajectory and the front obstacle point cloud.

8. A system for displaying a front panoramic image of a vehicle, comprising an image processing module, a trajectory prediction module, and an obstacle early warning module, wherein
the image processing module is configured to acquire a front image of the vehicle, and generate a panoramic display image based on the front image of the vehicle;
the trajectory prediction module is configured to acquire real-time speed and steering angle data of the vehicle, calculate a predicted trajectory of the vehicle based on the real-time speed and the steering angle data, and generate a first panoramic image by combining the predicted trajectory with the panoramic display image;
the obstacle early warning module is configured to acquire front obstacle information of the vehicle, determine a front obstacle position by combining the front obstacle information with the first panoramic image, and generate a second panoramic image by marking the front obstacle position on the first panoramic image; and
the obstacle early warning module is further configured to generate a third panoramic image based on the second panoramic image in a case where the front obstacle position overlaps with the predicted trajectory.

9. A computer-readable storage medium storing one or more programs, wherein the one or more programs, when executed, perform the method for displaying the front panoramic image of the vehicle as defined in any one of claims 1 to 7.

10. An electronic device, comprising a processor, a communication interface, the computer-readable storage medium as defined in claim 9, and a communication bus; wherein the processor, the communication interface, and the computer-readable storage medium communicate with one another through the communication bus; and the processor is configured to execute programs stored in the computer-readable storage medium.
